# EUROPÄISCHE PATENTSCHRIFT

(11) **EP 4 321 255 B1**
(45) Veröffentlichungstag und Bekanntmachung des Hinweises auf die Patenterteilung: **18.09.2024**
(21) Anmeldenummer: 22190249.7
(22) Anmeldetag: 12.08.2022
(51) Int. Cl.: B04B 5/04, B04B 9/08

(54) **DURCHFLUSSZENTRIFUGE UND VERFAHREN ZUR HERBEIFÜHRUNG EINES BETRIEBSBEREITEN ZUSTANDS EINER DURCHFLUSSZENTRIFUGE**
CONTINUOUS FLOW CENTRIFUGE AND METHOD FOR PRODUCING A READY STATE OF A CONTINUOUS FLOW CENTRIFUGE
CENTRIFUGEUSE À COURANT PARALLÈLE ET PROCÉDÉ D'AMENÉE D'UNE CENTRIFUGEUSE À COURANT PARALLÈLE À UN ÉTAT PRÊT À FONCTIONNER

(43) Veröffentlichungstag der Anmeldung: 14.02.2024
(73) Patentinhaber: Sigma Laborzentrifugen GmbH, 37520 Osterode (DE); Sartorius Stedim Biotech GmbH, 37079 Göttingen (DE)
(72) Erfinder: Bittner, Fabian, 37181 Hardegsen (DE)
(74) Vertreter: REHBERG HÜPPE + PARTNER

(56) Entgegenhaltungen:
- WO-A1-2013/043316
- DE-A1- 4 330 905

## Beschreibung

### TECHNISCHES GEBIET DER ERFINDUNG

Die Erfindung betrifft eine Durchflusszentrifuge, bei der zumindest temporär einer Zentrifugationskammer mindestens ein Medium zugeführt wird und/oder ein Medium aus der Zentrifugationskammer abgeführt wird, während die Zentrifugationskammer rotiert. Bei dem mindestens einen Medium handelt es sich insbesondere um das zu zentrifugierende Medium, eine Spülflüssigkeit, eine Wasch- oder Buffer-Lösung, ein aus dem zentrifugierten Medium extrahiertes, modifiziertes Medium und/oder ein Sediment in der Zentrifugationskammer.

Um lediglich einige die Erfindung nicht beschränkende Beispiele zu nennen, kann es sich bei der Durchflusszentrifuge um eine Blutzentrifuge handeln, bei der das zu zentrifugierende Medium Blut ist und das extrahierte modifizierte Medium oder das Sediment Blutkörper oder -partikel sind, oder um eine Durchflusszentrifuge handeln, mittels welcher aus einem Medium Zellen, Mikroträger oder anderweitige, in dem Medium enthaltene Partikel gewonnen werden sollen. Möglich ist auch, dass es sich bei dem zentrifugierten Medium nicht um eine reine Flüssigkeit handelt, sondern das Medium eine Lösung oder Suspension mit Partikeln wie Zellen, Zelltrümmern oder -teilen usw. ist.

Die Durchflusszentrifuge findet beispielsweise Einsatz für die Erzeugung biopharmazeutischer Produkte in biopharmazeutischen Unternehmen oder in bio-verarbeitenden Anwendungen. Die Durchflusszentrifuge kann dabei bspw. der Gewinnung und/oder Klärung der Zellen oder Mikroträger dienen, wobei die derart gewonnenen Zellen auch Einsatz finden können für die Zelltherapie. Ein weiteres Anwendungsgebiet der Durchflusszentrifuge ist bspw. die Herstellung von Impfstoffen.

### STAND DER TECHNIK

Gattungsgemäße Durchflusszentrifugen werden bspw. von dem Unternehmen Sartorius AG, Otto-Brenner-Straße 20, 37079 Göttingen, Deutschland, und verbundenen Unternehmen unter der Kennzeichnung "Ksep" (eingetragene Marke) vertrieben. Auf der diese Durchflusszentrifugen betreffenden Internet-Seite
www.sartorius.com/en/products/process-filtration/cell-harvesting/ksep-systems (Datum der Einsichtnahme: 06.07.2022)
wird das Funktionsprinzip einer Durchflusszentrifuge, wie dieses auch für die vorliegende Erfindung Einsatz finden kann, auf Grundlage eines verlinkten Videos wie folgt beschrieben:
Ein Rotor der Durchflusszentrifuge weist vier Zentrifugationskammern auf, die als an einem Rotorkörper gehaltene Blutbeutel ausgebildet sein können und gleichmäßig über den Umfang verteilt sind. Die Zentrifugationskammern sind mit gleichen radialen Abständen von der Rotationsachse des Rotors angeordnet. Eine erste Anschlussleitung mündet radial innenliegend in eine Zentrifugationskammer, während eine zweite Anschlussleitung radial außenliegend in die Zentrifugationskammer mündet. In einer ersten Betriebsphase wird ein beispielsweise als Blut ausgebildetes erstes Medium über die zweite Anschlussleitung der Zentrifugationskammer zugeführt, während die Zentrifugationskammer mit dem Rotor rotiert. In der Zentrifugationskammer lagern sich infolge der Zentrifugation in dem Blut enthaltene Partikel (bspw. Blutkörper) radial außenliegend ab, während aus der Zentrifugationskammer radial innenliegend über die erste Anschlussleitung das Restmedium (also das radial außenliegend zugeführte Medium vermindert um die radial nach außen gedrängten Partikel) abgeführt wird. In dieser ersten Betriebsphase ist somit die erste Anschlussleitung eine Abführleitung, während die zweite Anschlussleitung eine Zuführleitung ist. Mit Fortsetzung dieses Betriebs erhöht sich der Anteil der Partikel und deren Konzentration in der Zentrifugationskammer, bis diese weitestgehend und schließlich vollständig mit den Partikeln gefüllt ist. In einer folgenden optionalen zweiten Betriebsphase erfolgt ein Waschen der Partikel in der Zentrifugationskammer. Zu diesem Zweck wird eine Wasch- oder Bufferlösung über die zweite Anschlussleitung in die Zentrifugationskammer geleitet. Die Wasch- oder Bufferlösung durchspült die Zentrifugationskammer und wird radial innenliegend über die erste Anschlussleitung abgeführt. Auch in dieser Betriebsphase rotiert die Zentrifugationskammer mit dem Rotor, so dass infolge der wirkenden Zentrifugationskraft die Partikel daran gehindert sind, mit der Wasch- oder Bufferlösung über die erste Anschlussleitung aus der Zentrifugationskammer auszutreten. Auch während der zweiten Betriebsphase dient die erste Anschlussleitung als Abführleitung für die Wasch- oder Bufferlösung, während die erste Anschlussleitung als Zuführleitung für die Wasch- oder Bufferlösung dient. In einer anschließenden dritten Betriebsphase erfolgt weiterhin die Verdrehung der Zentrifugationskammer mit dem Rotor. In der dritten Betriebsphase wird die Durchströmungsrichtung durch die Zentrifugationskammer umgekehrt und die Partikel werden über die zweite Anschlussleitung aus der Zentrifugationskammer entnommen, während über die erste Anschlussleitung Wasch- oder Bufferlösung in die Zentrifugationskammer nachgeführt werden kann. Die dritte Betriebsphase endet dann, wenn sämtliche Partikel aus der Zentrifugationskammer entnommen sind. Hieran können sukzessive weitere Zyklen mit den erläuterten drei Betriebsphasen anschließen.

Eine gattungsgemäße Durchflusszentrifuge ist beispielsweise in EP 3 936 601 A1 beschrieben. EP 3 936 601 A1 ist das Medium-Netzwerk zu entnehmen, welches an die Anschlussleitungen angeschlossen ist und die unterschiedlichen Betriebsphasen gewährleistet. Hinsichtlich dieses Medium-Netzwerks, der enthaltenen Pumpenanordnung, der Prozess-Steuereinheit, einer zusätzlichen Filteranordnung, Aufnahmebehältern für die unterschiedlichen Medien und hinsichtlich des Prozessablaufs wird beispielhaft auf EP 3 936 601 A1, EP 2 310 486 B1 und EP 2 485 846 B1 verwiesen.

EP 2 485 846 B1 beschreibt, dass in Durchflusszentrifugen fluidische Verbindungen zu mit dem Rotor rotierenden Anschlussleitungen mittels Drehdurchführungen problematisch sind, da die Drehdurchführungen anfällig gegenüber Leckagen sind und die Gefahr mit sich bringen, dass eine unerwünschte Kontamination der Medien erfolgt. Andererseits wird erläutert, dass gemäß US 4,216,770**,** US 4,419,089**,** DE 4,330,905, US 4,389,206 und US 5,665,048 Verbindungsstränge Einsatz finden, in die die Anschlussleitungen integriert sein können. Ein Endbereich des Verbindungsstrangs ist dabei gehäusefest angeordnet, während der andere Endbereich des Verbindungsstrangs an dem Rotor befestigt ist und mit dem Rotor verdreht wird.

Um zu vermeiden, dass die Verdrillung des Verbindungsstrangs infolge der Verdrehung des Rotors und der relativen Verdrehung der Endbereiche des Verbindungsstrangs immer größer wird, ist der Verbindungsstrang zusätzlich in einem Führungsrohr geführt. Das Führungsrohr verfügt über einen Teilabschnitt, der die Form eines abgerundeten U mit leicht auseinander gespreizten Seitenschenkeln unterschiedlicher Längen aufweist. Die Öffnung des U weist dabei in Richtung der Rotationsachse des Rotors. Der Verbindungsstrang tritt, ausgehend von dem gehäusefesten Endbereich unter Krümmung nach außen in einen Seitenschenkel des U ein. In dem U-förmigen Teilabschnitt wird der Verbindungsstrang durch das Führungsrohr um den Rotor herumgeführt. Der freie Endbereich des anderen Seitenschenkels des U des Führungsrohrs ist so zurück gekrümmt, dass dieser koaxial zur Drehachse des Rotors angeordnet ist und unmittelbar benachbart zu dem Eintritt des Verbindungsstrangs in den Rotor angeordnet ist. Das Führungsrohr wird dann mit der halben Drehzahl des Rotors angetrieben. EP 2 485 846 B1 verweist zur Erläuterung der Vermeidung der zunehmenden Verdrillung des Verbindungsstrangs durch Einsatz des rotierenden Führungsrohrs auf die Druckschrift US 3,586,413**.**

### AUFGABE DER ERFINDUNG

Der Erfindung liegt die Aufgabe zugrunde, eine Durchflusszentrifuge vorzuschlagen, bei der die Antriebs- und/oder Getriebeanordnung insbesondere hinsichtlich
- der Montage und/oder
- der Betriebssicherheit und/oder
- der Gewährleistung vorgegebener Betriebsbedingungen
verbessert ist. Des Weiteren liegt der Erfindung die Aufgabe zugrunde, ein Verfahren vorzuschlagen, mit dem die Herbeiführung eines betriebsbereiten Zustands einer Durchflusszentrifuge vereinfacht und/oder welches hinsichtlich der Gewährleistung der Betriebssicherheit und/oder vorbestimmter Betriebsbedingungen verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Durchflusszentrifuge, die über eine Antriebs- und/oder Getriebeanordnung verfügt. Mittels der Antriebs- und/oder Getriebeanordnung wird gewährleistet, dass einerseits der Rotor mit einer ersten Drehzahl angetrieben wird, während ein Ausgleichsrotor, Planetenträger und/oder Führungsrohr mit einer zweiten Drehzahl angetrieben wird, die doppelt so groß ist wie die erste Drehzahl, mit der der Rotor angetrieben wird.

In der Antriebs- und/oder Getriebeanordnung findet ein Planetengetriebe Einsatz. In dem Planetengetriebe ist mindestens ein Planetenriemenrad drehbar an einem Planetenträger gelagert. An das Planetenriemenrad oder von diesem weg wird ein Moment über einen Riemen, insbesondere einen Zahnriemen, übertragen. Der Einsatz eines Zahnriemens für eine Übertragung eines Moments in dem Planetengetriebe ist vorteilhaft gegenüber der Ausgestaltung der Getriebeanordnung gemäß dem Stand der Technik EP 2 485 846 B1, bei der in der Getriebeanordnung Zahnräder unmittelbar miteinander kämmen, da insbesondere der Einsatz des Riemens zu einer Erhöhung der Laufruhe des Rotors führen kann, die wiederum zur Vermeidung einer unerwünschten Durchmischung des zu zentrifugierenden Mediums vorteilhaft ist, und/oder der Einsatz des Riemens eine Erweiterung der Möglichkeiten für die Bauraumgestaltung ermöglicht. Des Weiteren kann durch den Einsatz eines Riemenantriebs die Notwendigkeit einer Schmierung mit Öl beseitigt werden und Verschleiß, Abrieb oder Rückstände vermieden werden, womit unerwünschte Kontaminierungen zumindest reduziert werden können. Unter Umständen kann in der erfindungsgemäßen Durchflusszentrifuge auch genutzt werden, dass für die Übertragung mittels eines Riemens ein antreibendes Riemenrad und ein abtreibendes Riemenrad dieselbe Drehrichtung aufweisen, während bei unmittelbar miteinander kämmenden Zahnrädern eine Drehrichtungsumkehr erfolgt, so dass für eine Beibehaltung der Drehrichtung ein drittes Zahnrad erforderlich ist.

Im Rahmen der Erfindung rotieren der Planetenträger und das Planetenriemenrad mit unterschiedlichen Drehzahlen, wobei der Planetenträger vorzugsweise mit der zweiten Drehzahl um eine Rotorachse rotiert, während das Planetenriemenrad vorzugsweise mit der ersten Drehzahl um eine von dem Planetenträger vorgegebene Drehachse oder einen Steg oder eine Planetenwelle desselben mit der zweiten Drehzahl rotiert.

Möglich wäre grundsätzlich, dass der Riemen eine Elastizität derart aufweist, dass dieser über das Planetenriemenrad (und ein zugeordnetes Antriebs- oder Abtriebsriemenrad oder Sonnenriemenrad) gezwungen werden kann, womit aber eine fest vorgegebene Abhängigkeit der Montagekräfte, der Elastizität des Riemens, der Anpresskraft des Riemens an das Planetenriemenrad und des Übermaßes einer seitlichen Führungsscheibe des Planetenriemenrads gegeben wäre. Andererseits möglich wäre, dass der Riemen eine gewisse Überlänge aufweist und die erforderliche Riemenspannung vorgegeben wird über ein elastisch beaufschlagtes Riemenspannrad. Die der Erfindung zugrunde liegenden Untersuchungen haben aber gezeigt, dass der Einsatz eines derartigen elastisch beaufschlagten Riemenspannrads nachteilig ist, da in der Durchflusszentrifuge das federbeaufschlagte Riemenspannrad mit der zweiten Drehzahl rotieren muss, was zu zentrifugalkraftabhängigen Auslenkungen des Riemenspannrads führt, die drehzahlabhängig sind und die Riemenspannung in unerwünschte Weise verändern.

Insbesondere auf Grundlage dieser Erkenntnisse schlägt die Erfindung vor, dass in der erfindungsgemäßen Durchflusszentrifuge der Planetenträger über eine Riemenspanneinheit gehalten ist. Die Riemenspanneinheit ist dabei derart ausgebildet, dass mittels derselben der Abstand des Planetenträgers von einer Rotorachse veränderbar ist. Hierbei kann die Riemenspanneinheit den Planetenträger an einem Ausgleichskörper eines Ausgleichsrotors so halten, dass der Abstand des Planetenträgers von der Rotorachse veränderbar ist.

Der erfindungsgemäße Einsatz der Riemenspanneinheit ermöglicht beispielsweise, dass zunächst ein Auflegen des Riemens auf das Planetenriemenrad für einen ersten Abstand des Planetenträgers und damit des Planetenriemenrads von der Rotorachse erfolgt. Der erste Abstand ist dabei so klein gewählt, dass dieses Auflegen mit kleinen Kräften möglich ist. Nach dieser Montage des Riemens kann dann der Abstand des Planetenträgers und damit der Planetenriemenräder von der Rotorachse auf einen zweiten, größeren Abstand verändert werden, womit die erforderliche Riemenspannung herbeigeführt wird, was auch unter Messung der Riemenspannung während der Veränderung des Abstandes oder iterativer Veränderung des Abstands mit iterativer Messung der Riemenspannung erfolgen kann. Hieran anschließend kann dann eine Fixierung der Riemenspanneinheit erfolgen, so dass der Abstand des Planetenträgers von der Rotorachse nicht mehr verändert werden kann. Hierbei erfolgt die Fixierung derart, dass auch keine Änderung des Abstands infolge der im Betrieb der Durchflusszentrifuge auftretenden Zentrifugationskräfte erfolgt.

Die Erfindung umfasst Ausführungsformen, bei welcher lediglich ein Riemen vorhanden ist, der dann über eine Riemenspanneinheit an einem zugeordneten Planetenträger gehalten ist. Möglich ist auch, dass zwei Planetenriemenräder mit jeweils zugeordneten Riemen Einsatz finden, wobei in diesem Fall möglich ist, dass die Planetenriemenräder dann jeweils über eine zugeordnete Riemenspanneinheit an einem zugeordneten Planetenträger gehalten sind. Für einen besonderen Vorschlag der Erfindung verfügt die Durchflusszentrifuge über zwei Planetenriemenräder, die drehfest miteinander verbunden sind, beispielsweise über eine Planetenwelle. Die beiden derart miteinander verbundenen Planetenriemenräder bilden somit eine Art Doppel- oder Stufenplaneten, wobei dabei vorzugsweise der Durchmesser der beiden Planetenriemenräder gleich groß ist. Die derart fest miteinander verbundenen Planetenriemenräder sind dann drehbar an einem gemeinsamen Planetenträger gelagert. In diesem Fall kann eine gemeinsame Riemenspanneinheit dazu genutzt werden, den Abstand der beiden Planetenriemenräder gemeinsam zu verändern.

Ein weiterer Vorschlag der Erfindung hat eine konkretere Ausgestaltung der Durchflusszentrifuge, der Getriebeanordnung und/oder des Planetengetriebes zum Gegenstand. Für diesen Vorschlag wird ein Rotor, welcher die Zentrifugationskammern aufweist, zur Zentrifugation mit einer ersten Drehzahl um die Rotorachse verdreht. Dem Rotor wird, wie auch eingangs erläutert worden ist, während der Zentrifugation ein Medium zugeführt und/oder von dem Rotor wird während der Zentrifugation ein Medium abgeführt. Die Durchflusszentrifuge verfügt über einen Verbindungsstrang, der mindestens eine Zuführleitung und mindestens eine Abführleitung für ein Medium aufweist. Ein Endbereich des Verbindungsstrangs ist an einem Gehäuse der Durchflusszentrifuge gehalten und damit ortsfest. In diesem Endbereich kann der Verbindungsstrang mit dem Medium, beispielsweise über eine Pumpe, beaufschlagt werden oder das Medium kann in diesem Endbereich abgeführt werden. In dem anderen Endbereich ist der Verbindungsstrang an dem Rotor gehalten, so dass dieser Endbereich der Medium-Kopplung mit der Zentrifugationskammer des Rotors dient. Die beiden Endbereiche werden mit der ersten Drehzahl relativ zueinander verdreht. Die beiden Endbereiche sind koaxial zu der Rotorachse des Rotors angeordnet, wobei der Verbindungsstrang derart gekrümmt ist, dass die beiden Endbereiche beide in dieselbe Richtung, nämlich in die Eintrittsrichtung in den Rotor, weisen. Erfindungsgemäß verfügt die Durchflusszentrifuge des Weiteren über eine Verbindungsstrangführung, die insbesondere als Führungsrohr ausgebildet ist, wie dies für den eingangs angeführten Stand der Technik erläutert worden ist. Durch die Verbindungsstrangführung erstreckt sich der Verbindungsstrang. Die Verbindungsstrangführung wird mit einer zweiten Drehzahl um die Rotorachse verdreht. Die Verbindungsstrangführung dient dazu, den Verbindungsstrang (in einem Längsschnitt) radial außenliegend von einer ersten Seite des Rotors an dem Rotor vorbeizuführen, wobei dann der Verbindungsstrang auf der zweiten Seite in den Rotor mündet. Für die Gewährleistung, dass keine Verdrillung des Verbindungsstrangs erfolgt, ist die Antriebs- und/oder Getriebeanordnung so ausgebildet, dass die erste Drehzahl des Rotors doppelt so groß ist wie die zweite Drehzahl der Verbindungsstrangführung.

In diesem Fall verfügt das Planetengetriebe über ein erstes Sonnenriemenrad und ein zweites Sonnenriemenrad, die koaxial zur Rotorachse angeordnet sind und um diese rotieren. Das erste Planetenriemenrad und das zweite Planetenriemenrad sind drehfest miteinander verbunden. Das erste Sonnenriemenrad steht über einen ersten Riemen mit dem ersten Planetenriemenrad in Antriebsverbindung. Entsprechend steht das zweite Planetenriemenrad über einen zweiten Riemen mit dem zweiten Sonnenriemenrad in Antriebsverbindung. Das erste Sonnenriemenrad wird mit der ersten Drehzahl angetrieben. Der (vorzugsweise an einem Ausgleichskörper eines Ausgleichsrotors gehaltene) Planetenträger wird mit der zweiten Drehzahl angetrieben. Das zweite Sonnenriemenrad treibt (vorzugsweise unmittelbar) den Rotor an. In diesem Fall wird der Planetenträger gemeinsam mit der Verbindungsstrangführung verdreht, wobei vorzugsweise der Planetenträger, die Verbindungsstrangführung und ein Grundkörper oder Trommelkörper gemeinsam den Ausgleichskörper bilden, der nach der Fixierung der Riemenspanneinheit eine starre Baueinheit ist und den Ausgleichsrotor bildet.

Für die Ermöglichung einer Veränderung des Abstands von der Rotorachse kann die Riemenspanneinheit eine beliebige Einstell- und/oder Führungseinrichtung aufweisen. Beispielsweise kann die Riemenspanneinheit über eine Kulisse verfügen, bei welcher eine Veränderung der Lage und des Abstands des Planetenträgers entlang einer beliebigen kurvenförmigen Bahn möglich ist, solange diese Kulisse zumindest eine Komponente in radialer Richtung aufweist. Für einen Vorschlag weist die erfindungsgemäße Durchflusszentrifuge mindestens eine Linearführung auf, über die der Planetenträger relativ zu der Verbindungsstrangführung geführt ist. Hierbei kann die Linearführung in eine Richtung radial zur Rotorachse orientiert sein oder unter einem spitzen Winkel hierzu geneigt sein, so dass lediglich eine Komponente der Linearführung in die Richtung radial zur Rotorachse orientiert ist.

Für die technische Ausgestaltung der Linearführung gibt es sämtliche aus dem Stand der Technik für Linearführungen bekannte Möglichkeiten. Für eine besonders einfache Lösung weist die Linearführung eine in einer Führungsausnehmung geführte Führungsstange auf zur Bereitstellung der Führungswirkung. Beispielsweise verfügt die Führungsstange über einen kreisförmigen Querschnitt, während die Führungsausnehmung ein kreisförmiges Führungsauge, welches von einer Führungsbohrung bereitgestellt sein kann. Möglich ist, dass in der Linearführung ein Paar einer Führungsstange und einer Führungsausnehmung Einsatz findet, wobei in diesem Fall die beiden Führungsstangen und Führungsausnehmungen parallel zueinander orientiert sind und die radiale Führungsrichtung vorgeben.

Um lediglich ein die Erfindung nicht beschränkendes Beispiel zu nennen, kann der Ausgleichskörper die Führungsstange tragen, während der Planetenträger die Führungsausnehmung ausbildet.

Möglich ist, dass die Riemenspanneinheit ohne Aktivierung einer Fixierung beliebige Stellungen in die Führungsrichtung ermöglicht, so dass von Hand der gewünschte Abstand eingestellt wird und dann eine Fixierung der Riemenspanneinheit und damit des Abstands von der Rotorachse erfolgt. Eine verbesserte Einstellung des gewünschten Abstands und damit der Riemenspannung (unter Umständen innerhalb eines vorgegebenen Toleranzbereichs) kann bei Einsatz einer Einstelleinrichtung erfolgen. Je nach Betätigung der Einstelleinrichtung erfolgt dann eine Veränderung des Abstands des Planetenträgers von der Rotorachse.

Eine besonders einfache Ausgestaltung einer derartigen Einstelleinrichtung weist eine Einstellschraube auf, bei der ein Einschraubwinkel der Einstellschraube den Abstand des Planetenträgers von der Rotorachse vorgibt. Die Einstellschraube führt eine Übersetzung des vom Bediener herbeigeführten Einstellwinkels in eine axiale Einstellbewegung des Planetenträgers herbei, die ein feinfühliges, übersetztes Einstellen ermöglicht. Unter Umständen ist auch möglich, dass eine Betätigung der Einstellschraube mit einem Drehmomentschlüssel auf ein vorgegebenes Drehmoment erfolgt, welches mit der gewünschten Riemenspannung korreliert.

Die Fixierung der Einstelleinrichtung kann grundsätzlich auf beliebige Weise erfolgen. Eine zusätzliche oder ausschließliche Fixierung kann für einen Vorschlag der Erfindung dadurch erfolgen, dass die eingestellte Stellung der Einstellschraube der Einstelleinrichtung über eine Kontermutter sicherbar ist.

Im Betrieb der Durchflusszentrifuge wirkt unter Umständen auf den Planetenträger und damit die Riemenspanneinheit nicht nur die Riemenspannkraft, sondern auch eine drehzahlabhängige Zentrifugalkraft, die bestrebt ist, den Planetenträger und die daran gehaltenen Bauelemente, insbesondere die Planetenriemenräder, nach außen von der Rotorachse weg zu bewegen. In diesem Fall kann es vorteilhaft sein, wenn (unter Umständen zusätzlich zu anderweitigen Sicherungs- und/oder Fixiermaßnahmen) ein Anschlag vorhanden ist, der einen maximalen Abstand des Planetenträgers von der Rotorachse vorgibt. Ist der Anschlag einstellbar, kann in einem ersten Montageschritt die Riemenspannung (beispielsweise durch Betätigung der Einstelleinrichtung) vorgegeben werden, wobei für diese Einstellung der Anschlag soweit nach außen bewegt wird, dass dieser nicht mit dem Planetenträger in Wechselwirkung tritt. Ist dann aber die Einstellung der Riemenspannung erfolgt (und unter Umständen auch eine anderweitige Fixierung der Riemenspanneinheit erfolgt), wird der Anschlag soweit radial nach innen in Richtung der Rotorachse bewegt, dass dieser zur Wirkung kommt und so (unmittelbar oder mittelbar) an dem Planetenträger anliegt, dass eine Bewegung des Planetenträgers radial nach außen durch den Anschlag blockiert ist. In dieser Stellung kann der Anschlag dann fixiert werden, was durch eine Verriegelung, einen Sicherungsstift, eine Klemmschraube, ein Sicherungsmittel wie ein LOCTITE (eingetragene Marke) erfolgen kann. Wirken dann im Betrieb der Laborzentrifuge die Zentrifugalkräfte auf den Planetenträger und die daran gehaltenen Bauelemente, können die Zentrifugalkräfte an dem Anschlag (zusätzlich) abgestützt werden.

Die Nutzung des Freiheitsgrades zur Einstellung des Abstands des Planetenträgers von der Rotorachse führt unter Umständen dazu, dass je nach eingestelltem Abstand eine veränderliche Unwucht des Ausgleichskörpers erzeugt wird. Erfindungsgemäß kann in der Durchflusszentrifuge mindestens eine Ausgleichsmasse an einem Ausgleichskörper vorgesehen sein. Der Abstand der mindestens einen Ausgleichsmasse von der Rotorachse und/oder die Masse derselben ist dann von der Betriebsstellung der Riemenspanneinheit und insbesondere dem Abstand des Planetenträgers von der Rotorachse abhängig. Ist auf die zuvor erläuterte Weise die gewünschte Riemenspannung durch Betätigung der Riemenspanneinheit herbeigeführt worden und die Riemenspanneinheit fixiert worden, kann in einem nächsten Montageschritt ein Auswuchten des Ausgleichskörpers erfolgen, wobei die Unwucht infolge der Betriebsstellung der Riemenspanneinheit durch die mindestens eine Ausgleichsmasse ausgeglichen wird.

Eine weitere Lösung der der Erfindung zugrunde liegenden Aufgabe stellt ein Verfahren dar, mit dem die Herbeiführung eines betriebsbereiten Zustands einer Durchflusszentrifuge, wie diese zuvor erläutert worden ist, erfolgen kann. In diesem Fall erfolgt über die Riemenspanneinheit, insbesondere eine Einstelleinrichtung derselben, eine Veränderung des Abstands des Planetenträgers von der Rotorachse, bis eine vorbestimmte Riemenspannung in dem Riemen herbeigeführt worden wird. Dies kann beispielsweise sukzessive durch sukzessive Verschiebung des Planetenträgers in radialer Richtung und anschließende Messung der Riemenspannung erfolgen oder während der Veränderung des Abstands oder der Betätigung der Einstelleinrichtung wird bereits die Riemenspannung gemessen.

Für die Messung der Riemenspannung können alle grundsätzlich hierfür bekannten Messeinrichtungen Einsatz finden. Für eine mögliche Ausführungsform findet in dem erfindungsgemäßen Verfahren eine Messeinrichtung Einsatz, bei der der Riemen beispielsweise mittels eines Stoßes in Schwingungen versetzt wird und die Riemenspannung auf Grundlage der Frequenz der transienten Schwingungen des Riemens ermittelt wird.

In weiterer Ausgestaltung dieses Verfahrens erfolgt nach der Veränderung des Abstands des Planetenträgers von der Rotorachse zur Einstellung der vorbestimmten Riemenspannung eine Wahl einer Masse mindestens einer für ein Auswuchten eingesetzten Ausgleichsmasse und/oder eine Wahl oder Veränderung eines Abstands einer Ausgleichsmasse von der Rotorachse in Abhängigkeit von der Betriebsstellung der Riemenspanneinheit und somit der herbeigeführten radialen Position des Planetenträgers.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine Durchflusszentrifuge in einem Längsschnitt entlang einer Rotorachse.
- **Fig. 2**: zeigt einen räumlichen Teilschnitt durch die Durchflusszentrifuge gemäß Fig. 1.
- **Fig. 3**: zeigt einen Teilschnitt der Durchflusszentrifuge gemäß Fig. 1 und 2 entlang einer Rotationsachse und durch einen Planetenträger mit zugeordneter Riemenspann-einheit.
- **Fig. 4**: zeigt als Teilbaugruppe einen Planetenträger mit daran gelagerten, drehfest miteinander verbundenen Planetenriemenrädern.

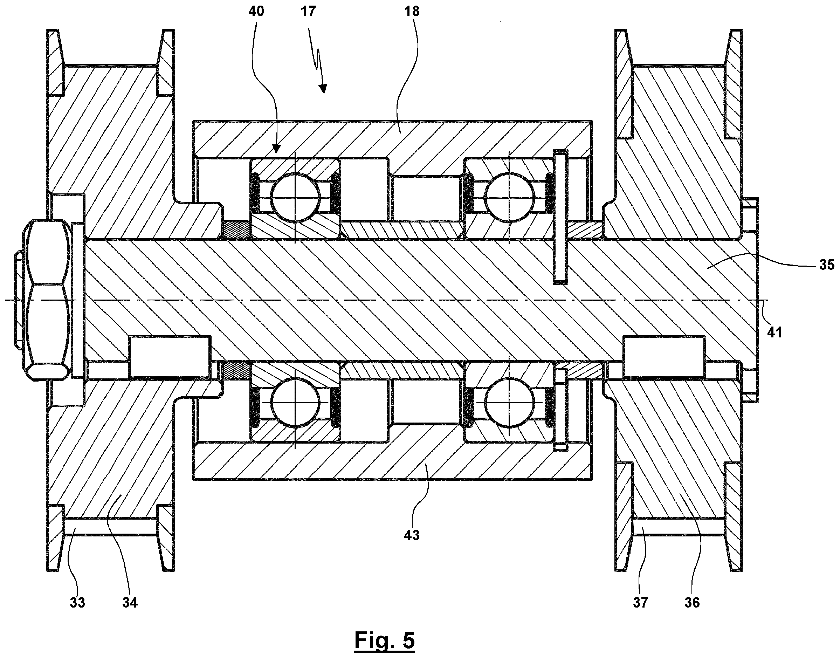

- **Fig. 5**: zeigt den Planetenträger mit den drehfest miteinander verbundenen Planetenriemenrädern gemäß Fig. 4 in einem Schnitt V-V.
- **Fig. 6**: zeigt die Verbindung des Planetenträgers mit einem Ausgleichskörper über die Riemenspanneinheit in einer Durchflusszentrifuge gemäß Fig. 1 bis 5.

### FIGURENBESCHREIBUNG

In den Figuren und der Beschreibung sind Bauelemente, welche sich hinsichtlich der Geometrie und/oder Funktion entsprechen oder ähneln, teilweise mit denselben Bezugszeichen gekennzeichnet, wobei diese dann mit den ergänzenden Buchstaben a, b voneinander unterschieden sein können. Auf diese Bauelemente wird dann teilweise auch ohne den ergänzenden Buchstaben Bezug genommen, womit dann eines der Bauelemente oder beide Bauelemente angesprochen sein sollen.

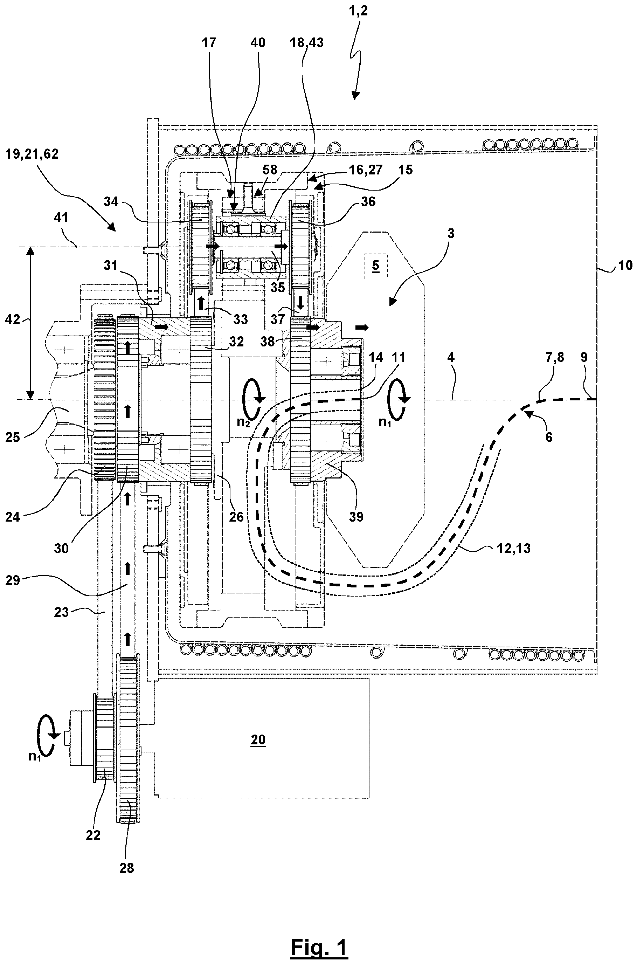

**Fig. 1** zeigt eine Durchflusszentrifuge 1, die beispielsweise als Blutzentrifuge 2 ausgebildet ist.

Die Durchflusszentrifuge 1 verfügt über einen Rotor 3, der mit einer ersten Drehzahl n₁ um eine Rotorachse 4 verdreht wird. Der Rotor 3 verfügt über mehrere, gleichmäßig über den Umfang verteilte und in gleichen Abständen beabstandet von der Rotorachse 4 angeordnete Zentrifugationskammern 5.

Die Durchflusszentrifuge 1 weist einen Verbindungsstrang 6 auf, der nur in Fig. 1 und lediglich schematisch mit einer gestrichelten Linie dargestellt ist. Der Verbindungsstrang 6 weist mindestens eine Zuführleitung 7 und mindestens eine Abführleitung 8 auf, über die ein Austausch von Medien mit den Zentrifugationskammern 5 möglich ist, wie dies eingangs erläutert worden ist.

Der Verbindungsstrang 6 ist in einem Endbereich 9 drehfest mit einem ruhenden Gehäuse 10 der Durchflusszentrifuge 1 verbunden. Der andere Endbereich 11 des Verbindungsstrangs 6 ist drehfest mit dem Rotor 3 verbunden. Im Betrieb der Durchflusszentrifuge 1 wird somit der Endbereich 11 des Verbindungsstrangs 6 mit der ersten Drehzahl n₁ gegenüber dem Endbereich 9 des Verbindungsstrangs 6 verdreht. Die Endbereiche 9, 11 sind koaxial zu der Rotorachse 4 angeordnet und weisen in dieselbe Richtung.

Eine Verbindungsstrangführung 12 ist hier als Führungsrohr 13 ausgebildet. Der Verbindungsstrang 6 erstreckt sich durch die Verbindungsstrangführung 12. Mittels der Verbindungsstrangführung 12 ist der Verbindungsstrang 6 von einer ersten, in Fig. 1 rechten Seite, die der Seite entspricht, auf der Endbereich 9 des Verbindungsstrangs 6 an dem Gehäuse 10 befestigt ist, radial außenliegend von dem Rotor 3 um den Rotor 3 herumgeführt auf eine zweite, in Fig. 1 linke Seite des Rotors 3. Die Verbindungsstrangführung 12 rotiert mit einer zweiten Drehzahl n₂. Um, wie eingangs erläutert und in dem eingangs zitierten Stand der Technik beschrieben, eine zunehmende Verdrillung des Verbindungsstrangs 6 mit der Verdrehung des Rotors 3 zu vermeiden, beträgt die zweite Drehzahl n₂ die Hälfte der ersten Drehzahl n₁. Die Formgebung der Verbindungsstrangführung 12 ist dabei in Fig. 1 lediglich prinzipiell angedeutet und kann in der Praxis von der dargestellten Geometrie abweichen. Der dem Rotor 3 benachbarte Endbereich 14 der Verbindungsstrangführung 12 endet unmittelbar benachbart der Eintrittsstelle des Verbindungsstrangs 6 in den Rotor 3 unter Ermöglichung der erforderlichen Relativbewegung.

Die Verbindungsstrangführung 12, insbesondere das Führungsrohr 13, ist Bestandteil eines Ausgleichsrotors 15, der auch als Ausgleichstrommel ausgebildet sein kann. Der Ausgleichsrotor 15 ist eine Baueinheit, in der im Betrieb der Durchflusszentrifuge 1 die Verbindungsstrangführung 12 fest mit einem Ausgleichskörper 16 montiert ist, an welchem in im Folgenden näher erläuterter Weise über eine Riemenspanneinheit 17 ein Planetenträger 18 befestigt ist. Der gesamte Ausgleichsrotor 15 rotiert mit der zweiten Drehzahl n₂.

Mittels einer Antriebs- und/oder Getriebeanordnung 19 wird der Antrieb des Rotors 3 mit der ersten Drehzahl n₁ und der Antrieb des Ausgleichsrotors 15 mit der zweiten Drehzahl n₂ gewährleistet. Ohne dass dieses zwingend der Fall ist, wird dies für das dargestellte Ausführungsbeispiel gewährleistet durch einen gemeinsamen Antriebsmotor 20, der über seine Abtriebswelle über zwei parallele Antriebszweige mit unterschiedlichen Übersetzungen einerseits den Rotor 3 und andererseits den Ausgleichsrotor 15 antreibt.

Für das dargestellte Ausführungsbeispiel ist ein Getriebe 21, welches zwischen den Antriebsmotor 20 und den Rotor 3 sowie den Ausgleichsrotor 15 zwischengeschaltet ist und die beiden Antriebszweige aufweist, ohne miteinander kämmende Zahnräder ausgebildet. Vielmehr finden hier lediglich Riemenantriebe Einsatz, die vorzugsweise als Zahnriemenantriebe ausgebildet sind.

Zunächst wird der Antrieb in dem zweiten Antriebspfad beschrieben, in welchem der Ausgleichsrotor 15 mit der zweiten Drehzahl n₂ angetrieben wird. In dem zweiten Antriebszweig treibt eine Antriebswelle des Antriebsmotors 20 ein Antriebsriemenrad 22 an, welches über einen Riemen 23 ein Eingangsriemenrad 24 antriebt. Das Eingangsriemenrad 24 besitzt einen Durchmesser, der doppelt so groß ist wie der Durchmesser des Antriebsriemenrads 22. Wird der Antriebsmotor 20 mit der ersten Drehzahl n₁ angetrieben, resultiert hier eine Rotation des Eingangsriemenrads 24 mit der halben, zweiten Drehzahl n₂. Das Eingangsriemenrad 24 ist fest verbunden mit einer Eingangswelle 25, die sich in das Innere des Ausgleichsrotors 15 erstreckt. In dem innenliegenden Endbereich verfügt die Eingangswelle 25 über einen Flansch 26, im Bereich dessen die Eingangswelle 25 mit dem Ausgleichskörper 16 des Ausgleichsrotors 15 fest verbunden ist.

Die Übertragung der Antriebsbewegung des Antriebsmotors 20 in dem zweiten Antriebspfad erfolgt somit über die Antriebswelle des Motors 20, das Antriebsriemenrad 22, den Riemen 23, das Eingangsriemenrad 24, die Eingangswelle 25, den Flansch 26 und den Ausgleichskörper 16 des Ausgleichsrotors 15, so dass dieser mit der zweiten Drehzahl n₂ rotiert.

Der Ausgleichskörper 16 verfügt vorzugsweise über einen Tragkörper 27, der in grober Näherung kreisscheibenförmig ausgebildet ist und in einem Umfangsbereich eine Ausnehmung 48 aufweist zur Aufnahme der Riemenspanneinheit 17 und des Planetenträgers 18 und der an dem Flansch 26 gehalten ist.

In dem ersten Antriebspfad treibt die Antriebswelle des Antriebsmotors 20 ein Antriebsriemenrad 28 an, dessen Durchmesser doppelt so groß ist wie der Durchmesser des Antriebsriemenrads 22. Das Antriebsriemenrad 28 treibt über einen Riemen 29 ein Eingangsriemenrad 30 an. Der Durchmesser des Eingangsriemenrads 30 entspricht vorzugsweise dem Durchmesser des Eingangsriemenrads 24 und dieser ist doppelt so groß wie der Durchmesser des Antriebsriemenrads 28. Die Drehbewegung des Eingangsriemenrads 30 wird hier starr über eine Hohlwelle 31 übertragen an ein Sonnenriemenrad 32. Die Eingangswelle 25 ist dabei so durch das Eingangsriemenrad 30, die Hohlwelle 31 und das Sonnenriemenrad 32 hindurchgeführt, dass die erforderliche Relativbewegung möglich ist.

Die Drehbewegung des Sonnenriemenrads 32 wird über einen Riemen 33 übertragen an ein Planetenriemenrad 34. Das Planetenriemenrad 34 ist fest verbunden mit einer Planetenwelle 35, die wiederum fest verbunden ist mit einem Planetenriemenrad 36. Die Planetenriemenräder 34, 36 weisen dieselben Durchmesser auf. Das Planetenriemenrad 36 treibt über einen Riemen 37 ein Sonnenriemenrad 38 an. Das Sonnenriemenrad 38 ist vorzugsweise auswechselbar, aber im Betrieb der Durchflusszentrifuge 1 fest mit dem Rotor 3 verbunden, was für das dargestellte Ausführungsbeispiel unter Zwischenordnung einer Hohlwelle 39 erfolgt.

Die Verbindungsstrangführung 12 und der darin angeordnete Verbindungsstrang 6 sind durch eine Bohrung des Sonnenriemenrads 38 und durch die Hohlwelle 39 so hindurchgeführt, dass die erforderliche Relativbewegung möglich ist.

Die Planetenwelle 35 ist über eine Lageranordnung 40 drehbar gegenüber dem Planetenträger 18 gelagert. Der Planetenträger 18 ist über die Riemenspanneinheit 17 im Betrieb der Durchflusszentrifuge 1 fest an dem Ausgleichskörper 16 oder dem Tragkörper 17 gehalten. Somit rotiert die Planetenwelle 35 mit der zweiten Drehzahl gemeinsam mit dem Ausgleichsrotor 15 um die Rotorachse 4.

Das Eingangsriemenrad 24, das Eingangsriemenrad 30, die Hohlwelle 31, das Sonnenriemenrad 32, das Sonnenriemenrad 38 und die Hohlwelle 39 sind koaxial zu der Rotorachse 4 angeordnet und diese rotieren um die Rotorachse 4.

In dem ersten Antriebspfad verläuft der Kraftfluss somit von der Antriebswelle des Motors 20 über das Antriebsriemenrad 28, den Riemen 29, das Eingangsriemenrad 30, Das Sonnenriemenrad 32, den Riemen 33, die Planetenwelle 35, das Planetenriemenrad 36, den Riemen 37 und das Sonnenriemenrad 39 zu dem Rotor 3. In Fig. 1 ist für den ersten Antriebspfad der Kraftfluss mittels Pfeilen dargestellt.

Der erste Antriebspfad und der zweite Antriebspfad sind über das Planetengetriebe 62 miteinander gekoppelt.

Eine Drehachse 41 der Planetenwelle 35 und der Planetenriemenräder 34, 36 weist einen Abstand 42 von der Rotationsachse 4 auf.

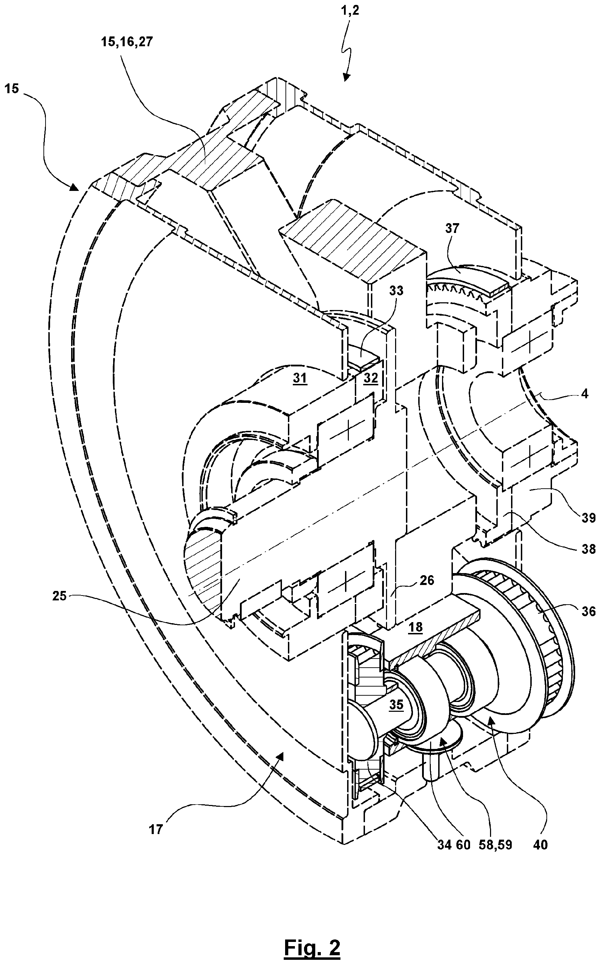

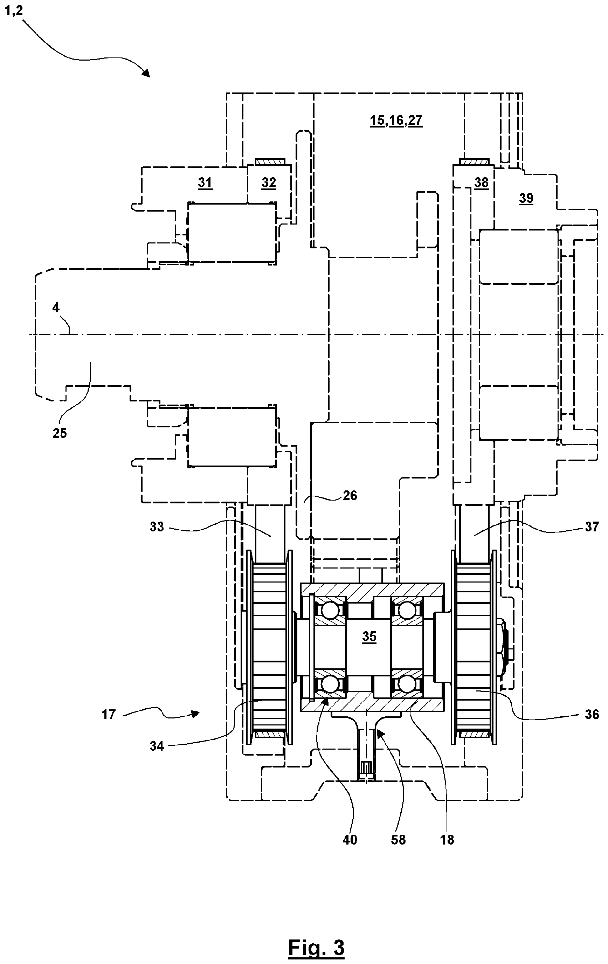

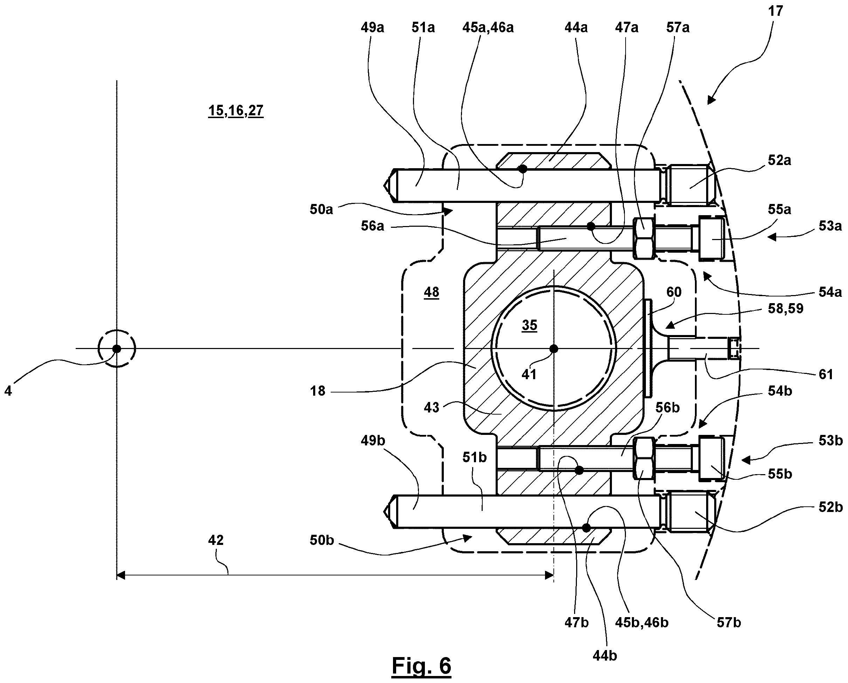

Die Riemenspanneinheit 17, der Planetenträger 16, die Lageranordnung 40 und die Planetenriemenräder 34, 36 mit der Planetenwelle 35 befinden sich in Fig. 1 in einer 12-Uhr-Stellung, während diese in Fig. 2 und 3 in einer 6-Uhr-Stellung dargestellt sind und in Fig. 6 in einer Drei-Uhr-Stellung dargestellt sind, was sich aus der Rotation des Ausgleichsrotors 15 mit der zweiten Drehzahl um die Rotorachse 4 in den unterschiedlichen Betriebsstellungen ergibt.

In **Fig. 2** **und** **3** ist nur ein Teil der Durchflusszentrifuge 1, insbesondere ohne den Rotor 3 und die Antriebsriemenräder 22, 28, dargestellt.

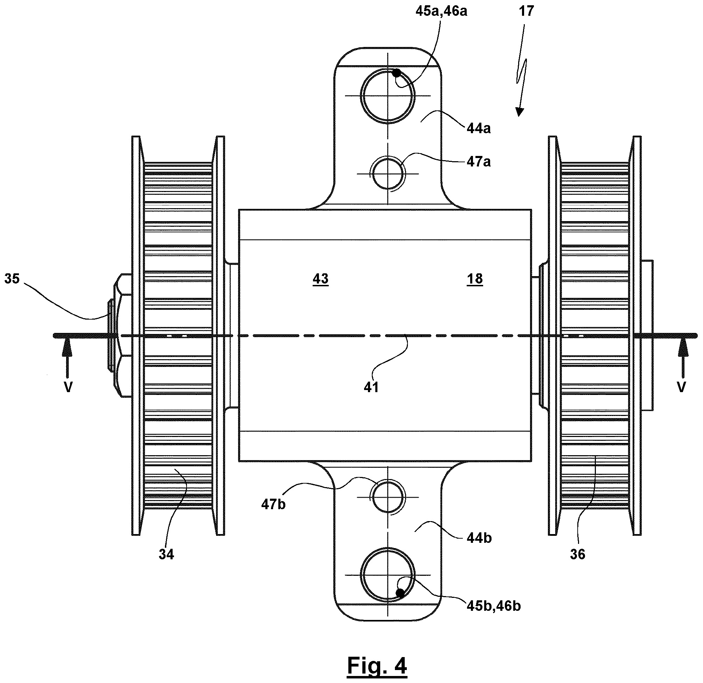

Im Folgenden wird die Funktion der Riemenspanneinheit 17 und die Gewährleistung der erforderlichen Riemenspannung der Riemen 33, 37 weiter erläutert:
Die Ausgestaltung der Riemenspanneinheit 17 und deren Wirkverbindung mit dem Ausgleichskörper 16 oder Tragkörper 27 einerseits und dem Planetenträger 18 andererseits ist am Besten in den **Fig. 3****,** **4** **und** **6** zu erkennen.

Der Planetenträger 18 weist eine Lagerhülse 43 auf, in welcher mittels einer Lageranordnung 40, hier beispielsweise zwei Kugellager, drehbar die Planetenwelle 35 mit den Planetenriemenrädern 34, 36 gelagert ist. Der Planetenträger 18 verfügt über sich quer zu der Drehachse 41 erstreckende Fortsätze oder Stege 44. In dem von der Drehachse 41 abgewandten Endbereichen verfügen die Stege 44 über Führungsausnehmungen 45a, 45b, die hier als Führungsbohrungen 46a, 46b ausgebildet sind. Zwischen den Führungsausnehmungen 45a, 45b und der Lagerhülse 43 verfügen die Stege 44 über Gewindebohrungen 47a, 47b. Die Führungsbohrungen 46 und die Gewindebohrungen 47 sind parallel zueinander orientiert und verfügen über Längsachsen, die radial zu der Rotorachse 4 durch die Drehachse 41 verlaufen.

Der Ausgleichskörper 16 verfügt über eine Ausnehmung 48, in der die Riemenspanneinheit 17, der Planetenträger 18, die Lageranordnung 40 und die Planetenwelle 35 mit den Planetenriemenrädern 34, 36 montiert sind. Hierbei erstrecken sich Führungsstangen 49a, 49b durch die Ausnehmung 48 und durch die Führungsausnehmungen 45a, 45b des Planetenträgers 18. Auf diese Weise ist eine Linearführung 50 gebildet, mittels welcher der Planetenträger 18 in eine Richtung radial zu der Rotorachse 4 durch die Drehachse 41 geführt ist. Eine Bewegung entlang der Linearführung 50 führt zu einer Veränderung des Abstands 42.

Für das dargestellte Ausführungsbeispiel verfügen die Führungsstangen 49a, 49b jeweils über einen Zylinderabschnitt 51a, 51b sowie einen Gewindeabschnitt 52a, 52b. Der Gewindeabschnitt 52 ist in einem radial außenliegenden Endbereich der Führungsstange 49 angeordnet und mit dem Ausgleichskörper 16 verschraubt. Hingegen ist der Endbereich des Zylinderabschnitts 51 aufgenommen in einer Sackloch-Zentrierbohrung des Ausgleichskörpers 17. Zwischen dem Gewindeabschnitt 52 und dem vorgenannten Endbereich des Zylinderabschnitts 51 ist mittels des Zylinderabschnitts 51 der Planetenträger 18 geführt, womit die Linearführung 50 gebildet ist.

Zur Bildung einer Einstelleinrichtung 53 sind Einstellschrauben 54a, 54b durch eine Bohrung des Ausgleichskörpers 16 ohne Gewindeeingriff hindurchgeführt, bis ein Kopf 55 der Einstellschraube 54 außenliegend zur Anlage an den Ausgleichskörper 16 kommt. Der in die Ausnehmung 48 hineinragende Gewindeabschnitt 56a, 56b ist jeweils mit einer zugeordneten Gewindebohrung 47a, 47b des Planetenträgers 16 verschraubt. Durch eine Veränderung des Einschraubwinkels der Einstellschrauben 54 kann stufenlos eine Veränderung des Abstands 42 erfolgen, wobei je nach Gewindesteigung der Gewindeabschnitte 56a, 56b eine Übersetzung des Drehwinkels der Einstellschraube 54 zu der Veränderung des Abstands 42 herbeigeführt werden kann. Ist eine gewünschte Stellung des Planetenträgers 18 und damit Riemenspannung der Riemen 33, 37 herbeigeführt, kann eine Sicherung der Position des Planetenträgers 18 durch Anziehen von Kontermuttern 57a, 57b erfolgen.

Optional kann zur zusätzlichen Abstützung von auf den Planetenträger 18 wirkenden Fliehkräften radial nach außen ein Anschlag 58 vorgesehen sein, dessen Abstand von der Rotorachse 4 entsprechend der Verstellung der Position des Planetenträgers 18 einstellbar ist. Für das dargestellte Ausführungsbeispiel wird der Anschlag 58 von einer Anschlagschraube 59 mit einem endseitigen großflächigen Anschlagteller 60 gebildet. Ein Gewindeabschnitt 61 der Anschlagschraube 59 ist hierbei mit einer Gewindebohrung des Ausgleichskörpers 16 verschraubt. Über eine Veränderung des Einschraubwinkels der Anschlagschraube 59 in den Ausgleichskörper 16 kann der Abstand des Anschlagtellers 60 von der Rotorachse 4 (und damit der Abstand des Planetenträgers 18 von der Rotorwelle 4, für den der Anschlag 58 zur Wirkung kommt) eingestellt werden. Vorzugsweise erfolgt eine zusätzliche Sicherung des Einschraubwinkels der Anschlagschraube 59, insbesondere durch Verwendung von LOCTITE (eingetragene Marke).

Gemäß Fig. 6 finden zwei Einstelleinrichtungen 53a, 53b mit jeweils einer Einstellschraube 54a, 54b Einsatz. Vorzugsweise erfolgt ein sukzessives teilweises Anziehen der Einstellschrauben 54a, 54b jeweils um ein kleines Stück, um ein gleichmäßiges Anziehen ohne ein Verkanten zu ermöglichen. Möglich ist, dass ein Anziehen der Einstellschrauben 54a, 54b mittels eines Drehmomentschlüssels erfolgt.

Mit den Sonnenriemenrädern 32, 38, den Planetenriemenrädern 34, 36, der koppelnden Planetenwelle 35 und dem die Planetenriemenräder 34, 36 lagernden Planetenträger 18 sowie dem Ausgleichsrotor 15 ist ein Planetengetriebe 62 gebildet, über den die beiden Antriebspfade verlaufen. Bei den beiden Gliedern des Planetengetriebes 62, die mit den unterschiedlichen Drehzahlen angetrieben werden, handelt es sich einerseits mit den Ausgleichsrotor 15 mit dem an dem Ausgleichskörper 16 gehaltenen Planetenträger 18 und andererseits um das eingangsseitig angeordnete Sonnenriemenrad 32, während der Abtrieb des Planetengetriebes 62 von dem ausgangsseitigen Sonnenriemenrad 38 gebildet ist.

In dem vorliegenden Anmeldungstext wird für die Gewährleistung der erforderlichen Übersetzungen auf die Durchmesser der Riemenräder abgestellt. Streng genommen ist für die Übersetzungen (hier 1:1, 2:1 bzw. 1:2) auf das entsprechende Verhältnis der Zähne der Riemenräder abzustellen, was zu geringen Abweichungen der Durchmesserverhältnisse führen kann.

### BEZUGSZEICHENLISTE

- 1: Durchflusszentrifuge
- 2: Blutzentrifuge
- 3: Rotor
- 4: Rotorachse
- 5: Zentrifugationskammer
- 6: Verbindungsstrang
- 7: Zuführleitung
- 8: Abführleitung
- 9: Endbereich
- 10: Gehäuse
- 11: Endbereich
- 12: Verbindungsstrangführung
- 13: Führungsrohr
- 14: Endbereich
- 15: Ausgleichsrotor
- 16: Ausgleichskörper
- 17: Riemenspanneinheit
- 18: Planetenträger
- 19: Antriebs- und/oder Getriebeanordnung
- 20: Antriebsmotor
- 21: Getriebe
- 22: Antriebsriemenrad
- 23: Riemen
- 24: Eingangsriemenrad
- 25: Eingangswelle
- 26: Flansch
- 27: Tragkörper
- 28: Antriebsriemenrad
- 29: Riemen
- 30: Eingangsriemenrad
- 31: Hohlwelle
- 32: Sonnenriemenrad
- 33: Riemen
- 34: Planetenriemenrad
- 35: Planetenwelle
- 36: Planetenriemenrad
- 37: Riemen
- 38: Sonnenriemenrad
- 39: Hohlwelle
- 40: Lageranordnung
- 41: Drehachse
- 42: Abstand
- 43: Lagerhülse
- 44: Fortsatz, Steg
- 45: Führungsausnehmung
- 46: Führungsbohrung
- 47: Gewindebohrung
- 48: Ausnehmung
- 49: Führungsstange
- 50: Linearführung
- 51: Zylinderabschnitt
- 52: Gewindeabschnitt
- 53: Einstelleinrichtung
- 54: Einstellschraube
- 55: Kopf
- 56: Gewindeabschnitt
- 57: Kontermutter
- 58: Anschlag
- 59: Anschlagschraube
- 60: Anschlagteller
- 61: Gewindeabschnitt
- 62: Planetengetriebe

## Patentansprüche

1. Durchflusszentrifuge (1) mit einer Antriebs- und/oder Getriebeanordnung (19) mit einem Planetengetriebe (62), bei dem mindestens ein Planetenriemenrad (34; 36) drehbar an einem rotierenden Planetenträger (18) gelagert ist, ein Moment des Planetenriemenrads (34; 36) über einen Riemen (33; 37) übertragen wird und der Planetenträger (18) und das Planetenriemenrad (34; 36) mit unterschiedlichen Drehzahlen angetrieben werden, **dadurch gekennzeichnet, dass** der Planetenträger (18) über eine mit dem Planetenträger (18) rotierende Riemenspanneinheit (17) gehalten ist, wobei über die Riemenspanneinheit (17) ein Abstand (42) des Planetenträgers (18) von einer Rotorachse (4) veränderbar ist.

2. Durchflusszentrifuge (1) nach Anspruch 1, **dadurch gekennzeichnet, dass** an dem Planetenträger (18) zwei drehfest miteinander verbundene Planetenriemenräder (34, 36) drehbar gelagert ist und über die Riemenspanneinheit (17) der Abstand beider Planetenriemenräder (34, 36) gemeinsam veränderbar ist.

3. Durchflusszentrifuge (1) nach Anspruch 2, **gekennzeichnet durch**
a) einen Rotor (3), der zur Zentrifugation mit einer ersten Drehzahl um die Rotorachse (4) verdreht wird und dem während der Zentrifugation ein Medium zugeführt wird und/oder von dem während der Zentrifugation ein Medium abgeführt wird,
b) einen Verbindungsstrang (6), der in einem Endbereich (9) an einem ruhenden Gehäuse (10) der Durchflusszentrifuge (1) gehalten ist und in dem anderen Endbereich (11) an dem Rotor (3) gehalten ist, so dass die beiden Endbereiche (9, 11) mit der ersten Drehzahl relativ zueinander verdreht werden, wobei die beiden Endbereich (9, 11) koaxial zu der Rotorachse (4) des Rotors (3) angeordnet sind und der Verbindungsstrang (6) dem Zuführen eines Mediums zu dem Rotor (3) und/oder Abführen eines Mediums von dem Rotor (3) dient,
c) eine Verbindungsstrangführung (12), durch welche sich der Verbindungsstrang (6) erstreckt, welche mit einer zweiten Drehzahl um die Rotorachse (4) verdrehbar ist und mittels welcher der Verbindungsstrang (6) radial außenliegend an dem Rotor (3) vorbeigeführt ist,
d) wobei die Antriebs- und/oder Getriebeanordnung (19) so ausgebildet ist, dass die erste Drehzahl des Rotors (3) doppelt so groß ist wie die zweite Drehzahl der Verbindungsstrangführung (12), und
e) das Planetengetriebe (62)
ea) ein erstes Sonnenriemenrad (32) und ein zweites Sonnenriemenrad (38) und
eb) ein erstes Planetenriemenrad (34) und ein zweites Planetenriemenrad (36), die drehfest miteinander verbunden sind, wobei das erste Sonnenriemenrad (32) über einen ersten Riemen (33) mit dem ersten Planetenriemenrad (34) in Antriebsverbindung steht und das zweite Planetenriemenrad (36) über einen zweiten Riemen (37) mit dem zweiten Sonnenriemenrad (38) in Antriebsverbindung steht, aufweist,
f) das erste Sonnenriemenrad (32) mit der ersten Drehzahl angetrieben wird, der Planetenträger (18) mit der zweiten Drehzahl angetrieben wird, das zweite Sonnenriemenrad (38) den Rotor (3) antreibt und der Planetenträger (18) gemeinsam mit der Verbindungsstrangführung (12) verdreht wird.

4. Durchflusszentrifuge (1) nach einem der vorhergehenden Ansprüche, **dadurch gekennzeichnet, dass** die Riemenspanneinheit (17) mindestens eine Linearführung (50) aufweist, über die der Planetenträger (18) relativ zu der Verbindungsstrangführung (12) und/oder einem Ausgleichskörper (16) eines Ausgleichsrotors (15) geführt ist.

5. Durchflusszentrifuge (1) nach Anspruch 4, **dadurch gekennzeichnet, dass** die Linearführung (50) eine in einer Führungsausnehmung (45) geführte Führungsstange (49) aufweist.

6. Durchflusszentrifuge (1) nach einem der vorhergehenden Ansprüche, **dadurch gekennzeichnet, dass** die Riemenspanneinheit (17) eine Einstelleinrichtung (53) aufweist, über welche der Abstand (42) des Planetenträgers (18) von der Rotorachse (4) veränderbar ist.

7. Durchflusszentrifuge (1) nach Anspruch 6, **dadurch gekennzeichnet, dass** die Einstelleinrichtung (53) eine Einstellschraube (54) aufweist.

8. Durchflusszentrifuge (1) nach Anspruch 7, **dadurch gekennzeichnet, dass** eine eingestellte Stellung der Einstellschraube (53) über eine Kontermutter (57) sicherbar ist.

9. Durchflusszentrifuge (1) nach einem der vorhergehenden Ansprüche, **dadurch gekennzeichnet, dass** ein Anschlag (58) vorhanden ist, welcher einen maximalen Abstand des Planetenträgers (18) von der Rotorachse (4) vorgibt.

10. Durchflusszentrifuge (1) nach Anspruch 9, **dadurch gekennzeichnet, dass** der Anschlag (58) einstellbar ist.

11. Durchflusszentrifuge (1) nach einem der vorhergehenden Ansprüche, **dadurch gekennzeichnet, dass** mindestens eine Ausgleichsmasse an einem Ausgleichskörper (16) vorgesehen ist, deren Abstand von der Rotorachse (4) und/oder Masse von der Betriebsstellung der Riemenspanneinheit (17) abhängig ist.

12. Verfahren zur Herbeiführung eines betriebsbereiten Zustands einer Durchflusszentrifuge (1) nach einem der vorhergehenden Ansprüche, **dadurch gekennzeichnet, dass** über die Riemenspanneinheit (17) der Abstand (42) des Planetenträgers (18) von der Rotorachse (4) verändert wird, bis eine vorbestimmte Riemenspannung in dem Riemen (32; 37) herbeigeführt ist.

13. Verfahren nach Anspruch 12, **dadurch gekennzeichnet, dass** nach der Veränderung des Abstandes (42) des Planetenträgers (18) von der Rotorachse (4) ein Auswuchten erfolgt, wobei der Abstand (42) von der Rotorachse (4) und/oder die Masse der mindestens einen für das Auswuchten eingesetzten Ausgleichsmasse von der Betriebsstellung der Riemenspanneinheit (17) abhängig ist.

## Claims

1. Passing flow centrifuge (1) comprising a driving arrangement and/or transmission arrangement (19) with a planetary gear set (62) wherein at least one planetary belt gear (34; 36) is supported for being rotated on a rotating planet carrier (18), a torque of the planetary belt gear (34; 36) being transmitted by a belt (33; 37) and the planet carrier (18) and the planetary belt gear (34; 36) being driven with different numbers of revolutions, **characterised in that** the planet carrier (18) is held by a belt tensioning unit (17) rotating with the planet carrier (18), wherein by means of the belt tensioning unit (17) it is possible to change a distance (42) of the planet carrier (18) from a rotor axis (4).

2. Passing flow centrifuge (1) of claim 1, **characterised in that** two planetary belt gears (34, 36) connected to each other with a fixation against rotation are supported for being rotated on the planet carrier (18) and by the belt tensioning unit (17) it is possible to change the distances of the two planetary belt gears (34, 36) in common.

3. Passing flow centrifuge (1) of claim 2, **characterised by**
a) a rotor (3) which is rotated with a first number of revolutions about the rotor axis (4) for the centrifugation and to which a medium is delivered during the centrifugation and/or from which a medium is discharged during the centrifugation,
b) a connecting section (6) which is held by a resting housing (10) of the passing flow centrifuge (1) in one end region (9) and held by the rotor (3) in the other end region (11) so that the two end regions (9, 11) are rotated relative to each other with the first number of revolutions, wherein the two end regions (9, 11) are arranged coaxially to the rotor axis (4) of the rotor (3) and the connecting section (6) serves for delivering a medium to the rotor (3) and/or for discharging a medium from the rotor (3),
c) a connecting section guidance (12), through which the connecting section (6) extends and which can be rotated with a second number of revolutions about the rotor axis (4) and by means of which the connecting section (6) is passed radially outside from the rotor (3),
d) wherein the driving arrangement and/or transmission arrangement (19) is designed such that the first number of revolutions of the rotor (3) doubles the second number of revolutions of the connecting section guidance (12) and
e) the planetary gear set (62) comprises
ea) a first sun belt gear (32) and a second sun belt gear (38) and
eb) a first planetary belt gear (34) and a second planetary belt gear (36) which are connected to each other with a fixation against rotation, the first sun belt gear (32) establishing a driving connection via a first belt (33) with the first planetary belt gear (34) and the second planetary belt gear (36) establishing a driving connection via a second belt (37) with the second sun belt gear (38),
f) the first sun belt gear (32) being driven with the first number of revolutions, the planet carrier (18) being driven with the second number of revolutions, the second sun belt gear (38) driving the rotor (3) and the planet carrier (18) being rotated in common with the connecting section guidance (12).

4. Passing flow centrifuge (1) of one of the preceding claims, **characterised in that** the belt tensioning unit (17) comprises at least one linear guidance (50) by which the planet carrier (18) is guided relatively to the connecting section guidance (12) and/or a compensation body (16) of a compensation rotor (15).

5. Passing flow centrifuge (1) of claim 4, **characterised in that** the linear guidance (50) comprises a guiding rod (49) guided in a guiding recess (45).

6. Passing flow centrifuge (1) of one of the preceding claims, **characterised in that** the belt tensioning unit (17) comprises an adjusting device (53) by which it is possible to change the distance (42) of the planet carrier (18) from the rotor axis (4).

7. Passing flow centrifuge (1) of claim 6, **characterised in that** the adjusting device (53) comprises an adjusting screw (54).

8. Passing flow centrifuge (1) of claim 7, **characterised in that** an adjusted position of the adjusting screw (53) can be secured by a counter nut (57).

9. Passing flow centrifuge (1) of one of the preceding claims, **characterised in that** a stop (58) is provided which defines a maximum distance of the planet carrier (18) from the rotor axis (4).

10. Passing flow centrifuge (1) of claim 9, **characterised in that** it is possible to adjust the stop (58).

11. Passing flow centrifuge (1) of one of the preceding claims, **characterised in that** at least one compensation weigth is provided at a compensation body (16), the distance of the compensation weigth from the rotor axis (4) and/or the mass of the compensation weigth depending from the operational position of the belt tensioning unit (17).

12. Method for achieving a state of a passing flow centrifuge (1) of one of the preceding claims ready for operation, **characterised in that** the distance (42) of the planet carrier (18) from the rotor axis (4) is changed by the belt tensioning unit (17) until a predetermined belt tension has been achieved in the belt (32; 37).

13. Method of claim 12, **characterised in that** after the change of the distance (42) of the planet carrier (18) from the rotor axis (4) the rotating masses are balanced, wherein the distance (42) from the rotor axis (4) and/or the mass of the at least one compensation weight used for the balancing depends on the operational position of the belt tensioning unit (17).

## Revendications

1. Centrifugeuse à courant parallèle (1) avec un dispositif d'entraînement et/ou de transmission (19) avec un engrenage planétaire (62), dans lequel au moins une roue planétaire (34 ; 36) est logée de manière rotative au niveau d'un support planétaire rotatif (18), un couple de la roue planétaire (34 ; 36) est transmis par l'intermédiaire d'une courroie (33 ; 37) et le support planétaire (18) et la roue planétaire (34 ; 36) sont entraînés avec des vitesses de rotation différentes, **caractérisée en ce que** le support planétaire (18) est maintenu par l'intermédiaire d'une unité de serrage de courroie (17) tournant avec le support planétaire (18), dans lequel l'unité de serrage de courroie (17) permet de faire varier une distance (42) entre le support planétaire (18) et un axe de rotor (4).

2. Centrifugeuse à courant parallèle (1) selon la revendication 1, **caractérisée en ce que**, sur le support planétaire (18), sont logées de manière rotative deux roues planétaires (34, 36) reliées entre elles de manière solidaire en rotation, et l'unité de serrage de courroie (17) permet de faire varier la distance des deux roues planétaires (34, 36) entre elles.

3. Centrifugeuse à courant parallèle (1) selon la revendication 2, **caractérisée par**
a) un rotor (3), qui est mis en rotation pour la centrifugation avec une première vitesse de rotation autour de l'axe de rotor (4), et dans lequel, pendant la centrifugation, un milieu est introduit et/ou hors duquel, pendant la centrifugation, un milieu est évacué,
b) un brin de liaison (6) qui est maintenu, dans une partie d'extrémité (9), sur un boîtier (10) au repos de la centrifugeuse à courant parallèle (1) et, dans l'autre partie d'extrémité (11), sur le rotor (3), de sorte que les deux parties d'extrémité (9, 11) sont mises en rotation l'une par rapport à l'autre avec la première vitesse de rotation, dans lequel les deux parties d'extrémité (9, 11) sont disposées coaxialement par rapport à l'axe de rotor (4) du rotor (3) et le brin de liaison (6) permet l'introduction d'un milieu dans le rotor (3) et/ou l'évacuation d'un milieu hors du rotor (3),
c) un guidage de brin de liaison (12) à travers lequel le brin de liaison (6) s'étend, qui peut être mis en rotation avec une deuxième vitesse de rotation autour de l'axe de rotor (4) et au moyen duquel le brin de liaison (6) est guidé radialement à l'extérieur le long du rotor (3),
d) dans lequel le dispositif d'entraînement et/ou de transmission (19) est conçu de sorte que la première vitesse de rotation du rotor (3) est deux fois plus grande que la deuxième vitesse de rotation du guidage de brin de liaison (12) et
e) l'engrenage planétaire (62)
ea) comprend une première roue solaire (32) et une deuxième roue solaire (38) et
eb) comprend une première roue planétaire (34) et une deuxième roue planétaire (36), qui sont reliées entre elles de manière solidaire en rotation, dans lequel la première roue solaire (32) est en liaison d'entraînement avec la première roue planétaire (34) par l'intermédiaire d'une première courroie (33) et la deuxième roue planétaire (36) est en liaison d'entraînement avec la deuxième roue solaire (38) par l'intermédiaire d'une deuxième courroie (37),
f) la première roue solaire (32) est entraînée avec la première vitesse de rotation, le support planétaire (18) est entraîné avec la deuxième vitesse de rotation, la deuxième roue solaire (38) entraîne le rotor (3) et le support planétaire (18) est mis en rotation conjointement avec le guidage de brin de liaison (12).

4. Centrifugeuse à courant parallèle (1) selon l'une des revendications précédentes, **caractérisée en ce que** l'unité de serrage de courroie (17) comprend au moins un guidage linéaire (50) par l'intermédiaire duquel le support planétaire (18) est guidé par rapport au guidage de brin de liaison (12) et/ou un élément compensateur (16) d'un rotor de compensation (15).

5. Centrifugeuse à courant parallèle (1) selon la revendication 4, **caractérisée en ce que** le guidage linéaire (50) comprend une tige de guidage (49) guidée dans un évidement de guidage (45).

6. Centrifugeuse à courant parallèle (1) selon l'une des revendications précédentes, **caractérisée en ce que** l'unité de serrage de courroie (17) comprend un dispositif de réglage (53) par l'intermédiaire duquel la distance (42) entre le support planétaire (18) et l'axe de rotor (4) peut être modifiée.

7. Centrifugeuse à courant parallèle (1) selon la revendication 6, **caractérisée en ce que** le dispositif de réglage (53) comprend une vis de réglage (54).

8. Centrifugeuse à courant parallèle (1) selon la revendication 7, **caractérisée en ce qu'**une position réglée de la vis de réglage (53) peut être bloquée à l'aide d'un contre-écrou (57).

9. Centrifugeuse à courant parallèle (1) selon l'une des revendications précédentes, **caractérisée en ce qu'**une butée (58) est prévue, qui définit une distance maximale entre le support planétaire (18) et l'axe de rotor (4).

10. Centrifugeuse à courant parallèle (1) selon la revendication 9, **caractérisée en ce que** la butée (58) est réglable.

11. Centrifugeuse à courant parallèle (1) selon l'une des revendications précédentes, **caractérisée en ce qu'**au moins une masse de compensation est prévue sur un élément compensateur (16), dont la distance par rapport à l'axe de rotor (4) et/ou la masse dépendent de la position de fonctionnement de l'unité de serrage de courroie (17).

12. Procédé de mise dans un état prêt à fonctionner d'une centrifugeuse à courant parallèle (1) selon l'une des revendications précédentes, **caractérisé en ce que** l'unité de serrage de courroie (17) permet de modifier la distance (42) entre le support planétaire (18) et l'axe de rotor (4), jusqu'à ce qu'une tension de courroie prédéterminée soit obtenue dans la courroie (32 ; 37).

13. Procédé selon la revendication 12, **caractérisé en ce que**, après la modification de la distance (42) entre le support planétaire (18) et l'axe de rotor (4), a lieu un équilibrage, dans lequel la distance (42) par rapport à l'axe de rotor (4) et/ou la masse d'au moins une masse de compensation utilisée pour l'équilibrage dépendent de la position de fonctionnement de l'unité de serrage de courroie (17).
